# FASCICULE DE BREVET EUROPEEN

(11) **EP 2 812 183 B1**
(45) Date de publication et mention de la délivrance du brevet: **08.04.2020**
(21) Numéro de dépôt: 13712829.4
(22) Date de dépôt: 05.02.2013
(51) Int. Cl.: B32B 3/12, E04C 2/34, E04C 2/36, E04C 2/54, B32B 27/14, B32B 27/36, E04D 3/06, E04D 13/16, B32B 3/26

(54) **PLAQUE ALVEOLAIRE MULTIPAROIS COMPORTANT DES PARTICULES DE VERRE**
MEHRWANDIGE ALVEOLARPLATTE MIT GLASPARTIKELN
MULTI-WALLED ALVEOLAR PANEL COMPRISING GLASS PARTICLES

(30) Priorité: 06.02.2012 FR 1251054; 08.02.2012 FR 1251152; 19.04.2012 FR 1253612
(43) Date de publication de la demande: 17.12.2014
(73) Titulaire: H.I.S.L., 57430 Sarralbe (FR)
(72) Inventeur: LOTH, Benoit, F-57430 Sarralbe (FR)
(74) Mandataire: Rhein, Alain
(86) Numéro de dépôt international: PCT/FR2013/000037
(87) Numéro de publication internationale: WO 2013/117833

(56) Documents cités:
- EP-A1- 1 306 496
- WO-A1-2011/020671
- WO-A1-2011/045322
- WO-A2-2011/150901
- DE-A1- 19 954 955
- DE-U1-202011 050 486
- FR-A1- 2 623 228
- FR-A1- 2 828 509
- FR-A1- 2 943 702
- GB-A- 2 464 331
- US-A- 4 544 595
- US-A1- 2005 048 231
- US-A1- 2005 074 566

## Description

La présente invention concerne le domaine de la construction et du bâtiment.

La présente invention trouvera son application principalement dans le domaine de la couverture et/ou du bardage dans le bâtiment. La présente invention pourra également s'avérer intéressante pour la réalisation de dispositifs d'éclairage et/ou d'aération et/ou de désenfumage de toit, ouvrants ou non, de type lanterneau ponctuel, voûte filante, exutoire, puits de lumière, shed ou autres ouvrants de façade.

L'invention concerne plus particulièrement une plaque alvéolaire, par exemple obtenue à partir d'un matériau thermoplastique, dont les propriétés notamment acoustiques ont été améliorées, et pouvant être utilisée dans les applications susmentionnées.

Traditionnellement, dans le domaine du bâtiment, il est connu d'utiliser des plaques ou des parois fabriquées en verre, par exemple pour la réalisation de toitures de vérandas, ou de verrières, pour sa capacité notamment à permettre une bonne transmission de la lumière. Cependant, un tel matériau présente un certain nombre d'inconvénients, par exemple sa résistance mécanique ou encore un apport solaire trop important au moment de la période estivale, ou bien pouvant entrainer des risques d'éblouissement par le fait qu'il n'est pas diffusant.

Ainsi, dans le domaine du bâtiment, dans certaines conceptions, le verre peut être remplacé par des plaques alvéolaires, pouvant notamment être fabriquées en un matériau thermoplastique, par exemple en polycarbonate ou en un autre matériau plastique transparent ou translucide adapté.

Ces plaques alvéolaires présentent l'avantage d'être plus légères que les plaques fabriquées en verre, et sont également plus résistantes aux impacts tout en permettant une transmission satisfaisante des rayons lumineux. De telles plaques sont notamment décrites dans les documents de brevet EP 0741215 et FR 2827543.

Les plaques alvéolaires, notamment en polycarbonate, comportent généralement deux parois externes, également appelées couvertures externes, sensiblement parallèles entre elles, ainsi qu'une pluralité de parois transversales permettant un entretoisement ces parois externes. Dans la suite de la description, ces parois seront désignées par « parois externes longitudinales ».

Une plaque peut également comporter une pluralité de parois internes, s'étendant généralement sensiblement parallèlement aux parois externes longitudinales. Dans la suite de la description, ces parois internes de la plaque alvéolaire seront appelées « parois internes longitudinales ». Lesdites parois internes sont notamment aptes à favoriser le maintien d'un coefficient thermique satisfaisant.

Ainsi, on connait notamment de la demande de brevet français FR 2 623 228 une plaque alvéolaire dont les alvéoles peuvent contenir un matériau expansé, notamment de type perlite ou vermiculite.

Une telle plaque présente cependant de nombreux inconvénients. D'une part, les matériaux expansés, tels que la perlite ou encore la vermiculite, sont des matériaux opaques. De ce fait, ils ne permettent pas de laisser passer les rayons lumineux. Au contraire, l'on cherche actuellement à rendre les bâtiments les plus lumineux possibles, de façon naturelle, en utilisant les rayons solaires plutôt que l'électricité.

D'autre part, ces plaques alvéolaires ne permettent pas une diminution de la transmission des bruits aériens ou encore d'impacts, par exemple les gouttes de pluie tombant sur ladite plaque ou encore les bruits liés au trafic aérien. Cela entraine des nuisances sonores désagréables à l'intérieur du bâtiment équipé de telles plaques. Enfin, une amélioration de la tenue mécanique de la plaque, par exemple lors de chutes de grêle, ou encore au percement en cas d'incendie reste également à améliorer.

L'utilisation d'un aérogel de silice translucide, disposé dans les alvéoles des plaques, permet de remédier en partie à ces inconvénients. Cependant, l'isolation phonique, la résistance aux chutes de grêle ainsi qu'au percement en cas d'incendie, restent encore à améliorer.

Par exemple, le document US 2005/048231 décrit un panneau de vitrage en polycarbonate ou polyéthylène téréphthalate comprenant plusieurs couches d'alvéoles remplies d'un matériau isolant comme de l'aérogel de silice ou des microfibres ou des fibres de verre.

Le document DE 19954955 divulgue une plaque en bande translucide remplie d'un aérogel constitué de particules primaires s'agglomérant en particules secondaires, elle-même se combinant pour former un conglomérat d'une densité vingt fois supérieure à celle du verre.

Dans le document FR 2 828 509 est décrit un panneau isolant thermique dont la structure alvéolaire reçoit un matériau isolant thermique sous la forme de billes de polystyrène expansé qui présente les mêmes inconvénients que les matériaux expansés susmentionnés.

Le document WO 2011/150901 décrit un panneau avec une structure cellulaire comportant au moins une feuille de plastique cellulaire avec des chambres vides ou remplies, le remplissage étant constitué de particules diverses de matériau isolant, par exemple de la mousse de verre et/ou des débris de verre et/ou de la poudre de verre et/ou du polystyrène.

On connait encore la demande de brevet GB 2 464 331 qui décrit un panneau formé par l'assemblage de deux plaques alvéolaires, ces dernières pouvant être entretoisées de sorte à laisser libre un espace entre lesdites deux plaques. L'espace peut alors être rempli par un matériau, destiné à améliorer l'isolation thermique et phonique du panneau.

Cependant, un tel panneau est de conception compliquée, et, de ce fait, couteux. De plus, il ne permet pas de résoudre la problématique du transpercement en cas d'incendie, et l'isolation acoustique reste encore à améliorer.

La demande de brevet étasunienne US 4 544 595 propose, pour améliorer les propriétés acoustiques d'un panneau destiné à être positionné sur le toit d'une structure, de recouvrir une couche polyuréthane dans laquelle sont dispersées des billes permettant la formation de bulles d'air au sein de la mousse.

Cependant, la fabrication d'un tel panneau est fastidieuse et, de plus, la couche de mousse empêche les rayonnements solaires de traverser.

Ainsi, il convient de trouver une solution permettant d'améliorer simplement et efficacement l'isolation acoustique et la tenue mécanique des plaques alvéolaires, de même que leur résistance au feu, tout en maintenant leur niveau de propriétés thermiques et en gardant une transmission lumineuse satisfaisante.

A cet effet, la présente invention concerne une plaque alvéolaire multiparois comportant au moins deux parois externes longitudinales sensiblement parallèles entretoisées par plus de deux parois transversales, délimitant une pluralité d'alvéoles, caractérisée en ce que ladite plaque comporte un nombre n de parois internes longitudinales supérieur à 1 et s'étendant sensiblement parallèlement entre les deux parois externes longitudinales, la pluralité de parois internes longitudinales définissant un nombre de rangées d'alvéoles supérieur à deux et égal à n+1, chaque rangée d'alvéoles comprenant au moins deux alvéoles et en ce que au moins toutes les alvéoles situées sous l'une des deux parois externes sont remplies en totalité de particules de verre, lesdites particules étant des billes de verre transparentes ou translucides présentant une granulométrie comprise entre 425µm et 850µm.

Préférentiellement, la ou les alvéoles remplies de billes de verres sont obturées à leurs extrémités.

De façon intéressante, la ou les paroi(s) interne(s) longitudinale(s) située(s) de part et/ou d'autre de la rangée d'alvéoles, remplie de billes de verre, présente (nt) une épaisseur supérieure à 0,01mm, de préférence supérieure à 0,07mm.

Préférentiellement, la ou les paroi(s) interne(s) longitudinale(s) concernée(s) comporte(nt) par ailleurs une épaisseur au plus égale à l'épaisseur des parois externes longitudinales.

De manière toute particulière, la ou lesdites(s) paroi(s) interne(s) longitudinale(s) présente(nt) une épaisseur égale à celle des parois externes longitudinales.

Avantageusement, au moins les parois transversales situées de part et d'autre de la rangée d'alvéole, remplie de billes de verre, présentent une épaisseur supérieure à 0,01 mm, de préférence supérieure à 0,2mm.

Selon un mode de réalisation particulier, toutes les parois transversales que comporte la plaque selon l'invention présentent une épaisseur identique et supérieure à 0,01mm, de préférence supérieure à 0,2mm.

Préférentiellement, les parois transversales concernées comportent par ailleurs une épaisseur au plus égale à l'épaisseur des parois externes longitudinales.

De manière toute particulière, lesdites parois transversales présentent une épaisseur sensiblement égale à celle des parois externes longitudinales.

Préférentiellement les billes de verres utilisées dans le remplissage d'au moins une rangée d'alvéoles de la plaque alvéolaire multiparois sont des billes pleines.

La présente invention concerne également un dispositif d'éclairage et/ou d'aération et/ou de désenfumage de toit, ouvrant ou non, comportant au moins une plaque alvéolaire multiparois selon l'invention.

Toutes les alvéoles d'une rangée d'alvéoles de ladite plaque alvéolaire sont remplies de billes de verre, ladite rangée dont les alvéoles sont remplies étant celle située sous la paroi externe qui est en contact avec l'extérieur du bâtiment.

La présente invention concerne encore l'utilisation d'au moins une plaque alvéolaire selon l'invention en tant qu'habillage ou couverture pour la façade d'un bâtiment.

Une plaque alvéolaire selon l'invention peut également être utilisée en tant que cloison séparative de pièces.

La présente invention comporte de nombreux avantages. Notamment, le fait de remplir toutes les alvéoles d'au moins une rangée d'alvéoles située sous l'une des deux parois externes de la plaque alvéolaire multiparois par des billes de verre permet de conserver une transmission satisfaisante des rayons lumineux, ainsi qu'une bonne diffusion de ces derniers, permettant d'éviter ainsi l'éblouissement en cas de fort ensoleillement.

L'invention permet également une réduction de la transmission des bruits aériens et d'impact. De plus, il a également été mis en évidence que la présence de billes de verre dans une plaque alvéolaire permettait d'augmenter la résistance de ladite plaque au transpercement lorsque celle-ci est mise en présence d'objets brûlants. Enfin, les plaques alvéolaires multiparois comportant des billes de verre présentent une résistance à l'impact améliorée, notamment lors de chutes de grêle.

Enfin, la plaque alvéolaire selon l'invention reste cintrable, ce qui permet la conception de dispositifs présentant une surface non plane, tels que notamment les lanterneaux, les voûtes filantes, etc.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue schématique en coupe d'une plaque alvéolaire multiparois présentant deux parois transversales ;
- la figure 2 est une vue en coupe illustrant une plaque comportant une paroi interne longitudinale et une pluralité de parois transversales ;
- la figure 3 représente une vue schématique en coupe illustrant un mode de réalisation d'une plaque alvéolaire multiparois selon l'invention, ladite plaque comportant une pluralité de parois internes longitudinales et une pluralité de parois transversales ;
- la figure 4 représente une vue schématique en coupe illustrant un autre mode de réalisation de la plaque selon l'invention, dans lequel la paroi interne longitudinale, qui est au contact de la rangée d'alvéoles remplie de billes de verres, présente une épaisseur supérieure à celle des autres parois internes.

Tel que représentée sur les figures, la présente invention concerne une plaque alvéolaire multiparois 1. Ladite plaque 1 comporte nécessairement deux parois externes longitudinales 2, 21, également appelées couvertures externes. Ces dernières sont généralement sensiblement parallèles l'une à l'autre.

Préférentiellement, une plaque alvéolaire multiparois 1 est fabriquée en un matériau thermoplastique extrudé, par exemple en polycarbonate. Cependant, tout autre matériau adapté peut être utilisé pour la fabrication de cette plaque 1.

Les parois externes longitudinales 2, 21 de la plaque alvéolaire 1 sont préférentiellement entretoisées par au moins deux parois transversales 3 et 31. Ces dernières permettent de délimiter au moins une alvéole 4, entre les parois externes 2, 21 et les parois transversales 3, 31.

Selon l'invention les parois externes longitudinales 2, 21 sont entretoisées par un nombre supérieur à deux parois transversales 3, 31, 32 de manière à définir une pluralité d'alvéoles 4.

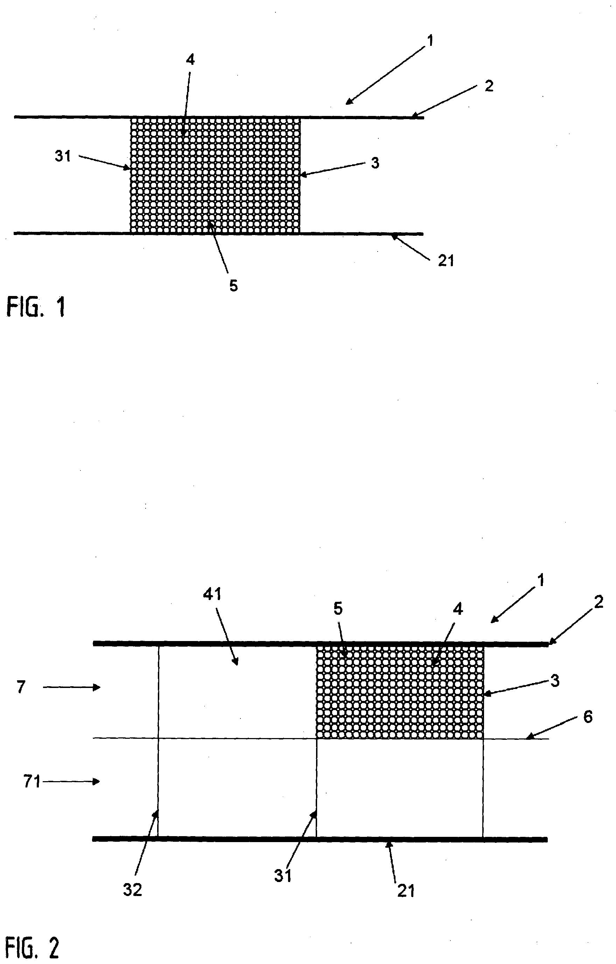

Les parois transversales 3, 31, 32 peuvent être avantageusement sensiblement perpendiculaires à chacune des deux parois externes longitudinales 2, 21, selon le mode de réalisation représenté sur la figure 1.

Selon l'invention, au moins une rangée d'alvéoles de la plaque alvéolaire multiparois 1 est remplie en totalité de billes de verre 5.

La présence de billes de verre 5 dans une des rangées d'alvéoles au moins de la plaque 1 permet de conserver une transmission satisfaisante des rayons lumineux, lesdites billes 5 étant transparentes ou translucides. Ces dernières améliorent également le facteur solaire, tout en assurant un effet diffusant permettant ainsi d'éviter, dans le bâtiment ou l'habitation pourvu de telles plaques 1, l'éblouissement selon la tâche de l'occupant.

Une plaque alvéolaire peut comporter, entre les deux parois externes longitudinales 2, 21, au moins une paroi interne longitudinale 6 s'étendant sensiblement parallèlement entre lesdites deux parois externes 2, 21. Une telle configuration permet de délimiter au moins deux rangées 7, 71 comportant chacune au moins une alvéole 4.

**Ainsi, lorsque la plaque alvéolaire multiparois 1 comporte,** outre les parois externes 2, 21, une paroi interne longitudinale 6 et deux parois transversales 3 et 31, ladite plaque 1 comprend alors deux rangées 7, 71, ces dernières comportant chacune une alvéole 4. Un tel mode de réalisation n'est pas représenté sur les figures.

Une paroi interne longitudinale 6 présente généralement une épaisseur inférieure à celle des plaques externes longitudinales 2, 21. En effet, ces dernières doivent être suffisamment rigides pour résister aux intempéries extérieures, notamment en cas de chutes de grêle.

La figure 2 illustre une plaque alvéolaire comportant d'une part une seule paroi interne longitudinale 6, permettant de délimiter deux rangées d'alvéoles 7 et 71, et d'autre part une pluralité de parois transversales 3, 31 et 32, de manière à délimiter deux alvéoles 4 et 41 dans chacune desdites rangées d'alvéoles 7 et 71.

Ainsi, dans le cas où la plaque alvéolaire multiparois 1 comporte plusieurs rangées 7, 71, au moins une alvéole 4 d'au moins une rangée d'alvéole 7, 71 est remplie au moins partiellement, et de préférence en totalité, de particules de verres 5.

Sur la figure 2 est illustré un exemple de plaque alvéolaire dans lequel une alvéole 4 de la rangée 7 est remplie au moins partiellement de particules de verre 5. Cependant, il serait également possible de remplir les deux alvéoles 4 et 41 de la rangée 7 ou de remplir un nombre supérieur à deux alvéoles dans ce cas de figure.

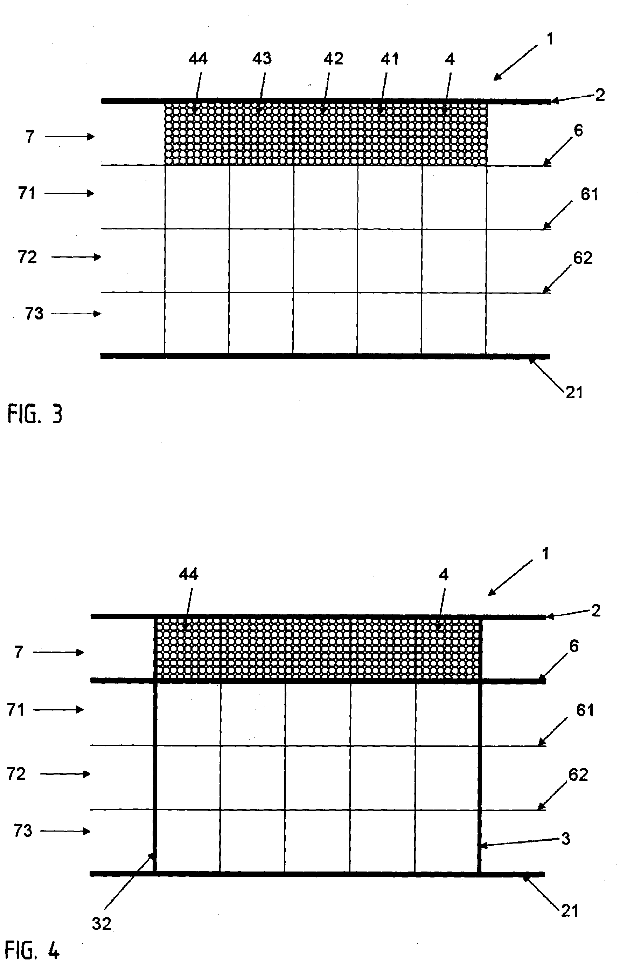

Selon l'invention, la plaque alvéolaire 1 comporte un nombre n de parois internes longitudinales 6 supérieur à un, comme illustré notamment sur la figure 3. Ainsi, la pluralité de parois internes longitudinales 6, 61 et 62 permet de définir un nombre supérieur à deux rangées d'alvéoles 7. Plus précisément, le nombre de rangées 7 est égal à n+1, n étant le nombre de parois internes longitudinales 6 disposées entre les deux parois externes 2, 21.

Généralement, le nombre de parois internes longitudinales 6 d'une telle plaque alvéolaire 1 est compris entre 1 et 15, et plus préférentiellement entre 4 et 8. Ainsi, le nombre de rangées d'alvéoles 7 est préférentiellement compris entre 2 et 16, et plus préférentiellement entre 5 et 9.

Préférentiellement, une plaque alvéolaire multiparois 1 présente une épaisseur comprise entre 10 et 60 mm et, plus préférentiellement encore entre 16 et 40 mm. Le grammage de ladite plaque 1 est avantageusement compris entre 2000 et 5000 g/m², et plus avantageusement entre 2500 et 4000 g/m².

Selon l'invention, toutes les alvéoles 4, 41, 42, 43 et 44 de la rangée d'alvéoles 7 sont remplies en totalité, de billes de verre 5.

La rangée d'alvéoles 7 dont toutes les alvéoles sont remplies de billes de verre 5 est la rangée 7 qui est directement située sous l'une des deux parois externes longitudinales 2, 21, de la plaque alvéolaire 1.

Cette configuration particulière permet, d'une part, d'améliorer nettement les propriétés acoustiques de la plaque 1, comme cela est illustré dans le tableau 1 de l'exemple 1 ci-dessous, tout en conservant une isolation thermique et une transmission lumineuse satisfaisante. De plus, l'exemple 2 démontre que la plaque alvéolaire 1 selon l'invention, présente de façon surprenante une résistance accrue au transpercement par un objet chaud lorsque ce dernier est disposé à la surface de ladite plaque 1. Avantageusement, la résistance de la plaque 1 à des projectiles quelconques, par exemple en cas de chutes de grêle sur ladite plaque 1, est également améliorée. En effet, la présence de particules de verre 5 dans au moins une des rangées d'alvéoles présente un effet amortisseur.

Cependant, ce mode de réalisation, dans lequel est remplie la rangée d'alvéoles 7 située sous l'une des parois externes longitudinales 2, 21, ne doit pas être compris comme étant limitatif de l'invention. En effet, il peut également s'avérer intéressant de remplir toutes les alvéoles 4 de deux rangées d'alvéoles 7 et 71 par exemple, ou encore d'un nombre supérieur à deux rangées 7, 71.

Selon encore un autre exemple particulièrement avantageux, toutes les alvéoles des deux rangées 7 et 73, situées respectivement sous les parois externes longitudinales 2 et 21, sont remplies en totalité, de billes de verre.

Ainsi il est possible, en fonction du résultat souhaité, de choisir judicieusement la ou les rangées d'alvéoles 7 qui doivent être garnies de billes de verre 5, de manière à trouver le bon compromis entre la réduction du bruit et le maintien d'une isolation thermique qui soit satisfaisante.

Préférentiellement, les alvéoles 4 qui sont remplies de billes de verre 5 sont obturées à leur extrémité, afin de permettre le maintien desdites billes 5 dans lesdites alvéoles 4.

Selon un mode de réalisation particulièrement avantageux, la ou les paroi(s) interne(s) longitudinale(s) située(s) de part et/ou d'autre de la rangée d'alvéole, remplie de billes de verre 5, présente(nt) une épaisseur supérieure à 0,01mm, de préférence supérieure 0.07mm, qui est l'épaisseur traditionnelle des parois internes longitudinales. Cette épaisseur est par ailleurs préférentiellement au plus égale à l'épaisseur des parois externes longitudinales 2, 21 qui est généralement de l'ordre de 0,40 ou 0,55mm. Cependant, un tel mode de réalisation n'est pas limitatif et l'épaisseur des parois externes longitudinales 2, 21 située(s) de part et/ou d'autre de la rangée d'alvéole, remplie de billes de verre 5, peut aller jusqu'à 2mm voir 3mm.

Plus préférentiellement encore, la ou lesdites(s) paroi(s) interne(s) longitudinale(s) située(s) de part et/ou d'autre de la rangée d'alvéole pourvue de billes de verre 5, présente(nt) une épaisseur sensiblement égale à celle des parois externes longitudinales 2, 21.

En effet, généralement, les parois internes longitudinales 6, 61 et 62 d'une plaque 1 présentent une épaisseur inférieure à celle des parois externes longitudinales 2 et 21. Une des conséquences d'une telle réduction de l'épaisseur de ces parois internes 6, 61 et 62 est un risque de déchirement de ces dernières au moment du soufflage pour enlever les copeaux formés lors de la découpe des plaques 1.

Un tel déchirement des parois internes longitudinales 6, 61 et 62 est particulièrement problématique lorsque la plaque 1 est remplie de billes de verre 5. En effet, lesdites billes 5 sont alors susceptibles de glisser dans une alvéole, ou une rangée d'alvéoles, qui n'est pas destinée à être remplie.

Le déchirement des parois internes longitudinales 6, 61 et 62 peut également survenir au moment de la manutention de la plaque 1 ou encore au moment du cintrage de cette dernière, par exemple lorsque ladite plaque 1 est destinée à la fabrication d'une voûte.

Ainsi, pour remédier à cet inconvénient, les parois internes longitudinales qui sont situées de part et/ou d'autre de la/des rangée(s) d'alvéoles comportant des billes de verres 5 présentent une épaisseur plus importante que les parois longitudinales qui ne sont pas en contact avec une alvéole comportant lesdites billes 5, cette épaisseur étant préférentiellement sensiblement égale à celle des parois externes longitudinales 2, 21. De cette manière, la paroi interne longitudinale présente une rigidité suffisante pour résister aux opérations de soufflage, de manutention, ou encore de cintrage de la plaque 1 selon l'invention.

Comme visible sur la figure 4, la plaque 1 comporte des billes de verre 5 dans la rangée d'alvéoles 7, située entre la paroi externe longitudinale 2 et la paroi interne longitudinale 6. Dans ce cas de figure précis, ladite paroi 6 présente alors une épaisseur supérieure aux autres parois internes longitudinales 61 et 62, l'épaisseur de ladite paroi 6 étant préférentiellement sensiblement la même que celle des parois externes 2 et 21.

Selon un autre mode de réalisation, également intéressant, les parois transversales situées de part et d'autre de la rangée d'alvéole, remplie de billes de verre, présentent une épaisseur supérieure à 0,01 mm, de préférence supérieure à 0,2mm.

Préférentiellement, cette épaisseur est, par ailleurs, au plus égale à l'épaisseur des parois externes longitudinales 2, 21.

De manière toute particulière, lesdites parois transversales situées de part et d'autre de la rangée d'alvéole, pourvue de billes de verre 5, présentent une épaisseur sensiblement égale à celle des parois externes longitudinales 2, 21.

Un tel mode de réalisation est également visible sur la figure 4. Dans ce cas de figure, étant donné que toutes les alvéoles de la rangée d'alvéole 7 sont remplies de billes de verres, les parois transversales présentant une augmentation de leur épaisseur sont les parois 3 et 32 situées chacune à une extrémité de la plaque 1. De cette manière, on évite une rupture de ces parois 3, 32 et une perte des particules de verres disposées dans les alvéoles 4, 44 situées à chacune des deux extrémités de la rangée d'alvéoles 7.

Comme mentionné jusqu'à présent, au moins une rangée d'alvéole de la plaque 1 selon l'invention est remplie de billes de verre 5.

Celles-ci permettent en effet une amélioration de la transmission lumineuse par rapport à des particules de forme quelconque.

Les billes de verre utilisées pour garnir au moins une des rangées d'alvéoles de la plaque 1 sont des microbilles de verres présentant une granulométrie comprise entre 425 et 850 µm.

Les billes de verres 5 peuvent être pleines ou creuses. Cependant, préférentiellement, on utilisera des billes pleines afin de remplir les alvéoles 4 de la plaque 1 selon l'invention. En effet, les billes pleines permettent une meilleure transmission du rayon lumineux que les billes creuses.

Les plaques alvéolaires multiparois 1 selon la présente invention, c'est-à-dire comprenant dans au moins une de leurs rangées d'alvéoles des billes de verre 5, peuvent être utilisées dans des domaines d'applications divers.

Ainsi, de telles plaques 1 peuvent être notamment utiles à la conception de dispositifs d'éclairage et/ou d'aération et/ou de désenfumage de toit, ouvrants ou non, de type lanterneau ponctuel, voûte filante, exutoire, puits de lumière, ou autre. En effet, les plaques 1 selon la présente invention permettent une bonne transmission des rayons lumineux, ainsi qu'une meilleure isolation phonique vis-à-vis des bruits d'impacts et des bruits aériens.

De ce fait, la présente invention concerne également un dispositif d'éclairage et/ou d'aération et/ou de désenfumage de toit, ledit dispositif pouvant être ouvrant ou non, incorporant au moins une plaque alvéolaire multiparois 1 selon la présente invention.

La plaque 1 que comporte le dispositif selon l'invention présente une rangée d'alvéoles dont toutes les alvéoles sont remplies en totalité, de billes de verre 5. Ladite rangée dont toutes les alvéoles sont garnies de billes, est avantageusement la rangée directement située sous la paroi externe longitudinale de la plaque qui est en contact avec l'extérieur du bâtiment.

Les avantages susmentionnés des plaques 1 incorporant des billes de verres permettent également une utilisation desdites plaques 1 dans le domaine du bardage, en tant qu'habillage ou couverture pour la façade d'habitations ou de bâtiments. Lesdites plaques 1 selon l'invention peuvent également servir pour la toiture ou les parois verticales des vérandas ou des verrières.

Selon un autre exemple d'application intéressant, les plaques alvéolaires 1 selon l'invention peuvent également être utilisées en tant que cloison séparant deux pièces attenantes, par exemple pour séparer deux bureaux contigus.

Cependant, en aucun cas, l'interprétation de la présente invention ne saurait être limitée à un type de plaque alvéolaire donné. En particulier cette invention s'applique à tout type de plaque alvéolaire 1 en matériau, généralement synthétique, comportant ou non des sérigraphies, transparent ou translucide.

On entend par :
- « matériau transparent » un matériau qui laisse passer la lumière et paraître avec netteté des objets qui se trouvent derrière ;
- « matériau translucide » un matériau perméable à la lumière mais qui ne permet pas de distinguer nettement des objets à travers

Les exemples ci-dessous sont destinés à illustrer la présente invention.

### Exemple 1 : Amélioration de l'isolation phonique

L'affaiblissement acoustique quant aux bruits aériens et l'intensité du bruit de pluie a été comparée entre une plaque alvéolaire dépourvue de particules de verre (plaque 1) et une plaque dont toutes les alvéoles de l'une des rangées d'alvéoles, plus particulièrement la rangée d'alvéoles située sous l'une des parois externes, sont remplies de billes de verre de granulométrie comprise entre 425 et 850*µ*m (plaque 2).

Plus précisément, les plaques qui ont été utilisées pour la réalisation de ce test présentent une épaisseur totale de 16 mm et comportent cinq parois internes.

Les résultats obtenus sont consignés dans le tableau 1 ci-dessous :

| | Plaque 1 | Plaque 2 | Verre double vitrage |
|---|---|---|---|
| Affaiblissement du bruit aérien (dB) | 18 | 24 | 26 |
| Intensité du bruit de la pluie (dB) | 72 | 61 | |

Ces résultats montrent que l'affaiblissement du bruit aérien est plus important lorsque la plaque alvéolaire comporte, dans toutes les alvéoles de l'une de ses rangées, des billes de verre. D'ailleurs, cet affaiblissement est comparable à celui obtenu lorsque l'on utilise du verre double vitrage. De même, l'intensité du bruit de la pluie est diminuée par rapport à une plaque ne contenant pas de particules de verre.

### Exemple 2 : Test de transpercement

La résistance au transpercement par un objet brulant a été comparée dans le cas d'une plaque alvéolaire dont l'ensemble des alvéoles est vide (plaque 1) et dans le cas d'une plaque alvéolaire dont une des rangées d'alvéoles est entièrement remplie de billes de verres (plaque 2).

Plus particulièrement, la rangée d'alvéoles garnie est la rangée située directement sous l'une des parois externes longitudinales, comme illustré sur la figure 3. Les billes de verres utilisées pour remplir chacune des alvéoles de la rangée présentent une granulométrie comprise entre 425 et 850µm.

Le test de transpercement est réalisé par l'intermédiaire d'un cylindre métallique présentant un diamètre de 50 mm et une hauteur de 80mm, pesant 800g et chauffé à une température de l'ordre de 650°C. Le cylindre brulant est ensuite posé en surface d'une plaque, comportant ou non dans ses alvéoles des billes de verre, ladite plaque étant placée horizontalement sur un support adéquat.

Le temps nécessaire au transpercement de la plaque par le cylindre, en secondes (s) est mesuré. Les résultats obtenus sont consignés dans le tableau 2 ci-dessous :

| | Plaque 1 | Plaque 2 |
|---|---|---|
| Temps de transpercement (s) | 20 | 42 |

Il ressort de ce test que, lorsque la plaque alvéolaire est remplie de billes de verre, sur au moins l'une de ses rangées d'alvéoles, le temps de transpercement est quasiment multiplié par deux par rapport au temps de transpercement d'une plaque dépourvue de billes. La présence de billes de verre permet donc un allongement du temps de transpercement de la plaque lorsque celle-ci est en présence d'un objet brûlant, ce qui entraine indéniablement une amélioration de la sécurité des personnes.

## Revendications

1. Plaque alvéolaire multiparois (1) en matériau transparent ou translucide comportant au moins deux parois externes longitudinales (2, 21) sensiblement parallèles entretoisées par plus de deux parois transversales (3, 31, 32), délimitant une pluralité d'alvéoles (4), **caractérisée en ce que** ladite plaque (1) comporte un nombre n de parois internes longitudinales (6, 61, 62) supérieur à un, chaque paroi interne longitudinale (6, 61, 62) s'étendant sensiblement parallèlement entre les deux parois externes longitudinales (2, 21), la pluralité de parois internes longitudinales (6, 61, 62) définissant un nombre de rangées d'alvéoles (7, 71, 72, 73) supérieur à deux et égal à n+1, chaque rangée d'alvéoles (7, 71, 72, 73) comprenant au moins deux alvéoles (4, 41), et **en ce que** au moins toutes les alvéoles (4, 41) de la rangée d'alvéoles (7) située sous l'une des deux parois externes (2, 21) sont remplies en totalité de particules de verre (5), lesdites particules étant des billes de verre transparentes ou translucides présentant une granulométrie comprise entre 425µm et 850µm.

2. Plaque alvéolaire multiparois (1) selon la revendication 1 **caractérisée en ce que** les alvéoles (4) remplies de billes de verres (5) sont obturées à leurs extrémités.

3. Plaque alvéolaire multiparois (1) selon l'une quelconque des revendications 1 ou 2 **caractérisée en ce que** la ou les parois interne(s) longitudinale(s) (6, 61, 62) située(s) de part et/ou d'autre de la rangée d'alvéoles (7, 71, 72, 73), remplie de billes de verre (5), présente(nt) une épaisseur supérieure à 0,01mm et de préférence supérieure à 0,07mm.

4. Plaque alvéolaire multiparois (1) selon la revendication 3 **caractérisée en ce que** la ou lesdites paroi(s) interne(s) longitudinale(s) (6, 61, 62) comporte(nt) par ailleurs une épaisseur au plus égale à l'épaisseur des parois externes longitudinales (2, 21).

5. Plaque alvéolaire multiparois (1) selon la revendication 3 **caractérisée en ce que** la ou lesdites paroi(s) interne(s) longitudinale(s) présente(nt) une épaisseur égale à celle des parois externes longitudinales (2, 21).

6. Plaque alvéolaire multiparois (1) l'une quelconque des revendications 1 à 5 **caractérisée en ce que** au moins les parois transversales situées de part et d'autre de la rangée d'alvéole, remplie de billes de verre, présentent une épaisseur supérieure à 0,01mm et de préférence supérieure à 0,2mm.

7. Plaque alvéolaire multiparois (1) l'une quelconque des revendications 1 à 6 **caractérisée en ce que** toutes les parois transversales, que comporte ladite plaque (1), présentent une épaisseur identique et supérieure à 0,01mm et de préférence supérieure à 0,2mm.

8. Plaque alvéolaire multiparois (1) selon l'une des revendications 6 ou 7 **caractérisée en ce que** lesdites parois transversales présentent une épaisseur au plus égale à l'épaisseur des parois externes longitudinales (2, 21).

9. Plaque alvéolaire multiparois (1) selon l'une des revendications 6 ou 7 **caractérisée en ce que** lesdites parois transversales présentent une épaisseur égale à celle des parois externes longitudinales (2, 21).

10. Plaque alvéolaire multiparois (1) selon l'une des revendications 1 à 9 **caractérisée en ce que** les billes de verres sont des billes pleines.

11. Plaque alvéolaire multiparois (1) selon l'une des revendications 1 à 9 **caractérisée en ce que** les billes de verres sont des billes creuses.

12. Dispositif ouvrant ou non d'éclairage et/ou d'aération et/ou de désenfumage de toit d'un bâtiment, **caractérisé en ce qu'**il comporte au moins une plaque alvéolaire multiparoi (1) selon l'une quelconque des revendications 1 à 11.

13. Dispositif selon la revendication 12 **caractérisé en ce que** toutes les alvéoles d'une rangée d'alvéoles (7) de ladite plaque alvéolaire (1) sont remplies de billes de verre (5), ladite rangée (7) dont les alvéoles sont remplies étant située sous la paroi externe qui est en contact avec l'extérieur du bâtiment.

14. Utilisation d'au moins une plaque alvéolaire (1) selon l'une quelconque des revendications 1 à 11 en tant qu'habillage ou couverture pour la façade d'un bâtiment.

15. Utilisation d'au moins une plaque alvéolaire (1) selon l'une quelconque des revendications 1 à 11 en tant que cloison séparative de pièces.

## Patentansprüche

1. Mehrwandige Hohlkammerplatte (1) aus durchsichtigem oder durchscheinendem Material, umfassend mindestens zwei im wesentlichen parallele äußere Längswände (2, 21), die durch mehr als zwei Querwände (3, 31, 32) verstrebt sind und eine Mehrzahl von Zellen (4) abgrenzen, **dadurch gekennzeichnet, dass** die besagte Platte (1) eine Anzahl n von inneren Längswänden (6, 61, 62) aufweist, die größer als eins ist, wobei sich jede innere Längswand (6, 61, 62) im Wesentlichen parallel zwischen den beiden äußeren Längswänden (2, 21) erstreckt, wobei die Mehrzahl von inneren Längswänden (6, 61, 62) eine Anzahl von Reihen von Zellen (7, 71, 72, 73) definieren, die größer als zwei und gleich n+1 ist, wobei jede Reihe von Zellen (7, 71, 72, 73) mindestens zwei Zellen (4, 41) umfasst, und dass mindestens alle Zellen (4, 41) der unterhalb einer der beiden Außenwände (2, 21) befindlichen Reihe von Zellen (7) vollständig mit Glasteilchen (5) gefüllt sind, wobei die besagten Teilchen durchsichtige oder durchscheinende Glasperlen sind, die eine Partikelgröße zwischen 425 µm und 850 µm aufweisen.

2. Mehrwandige Hohlkammerplatte (1) nach Anspruch 1, **dadurch gekennzeichnet, dass** die mit Glasperlen (5) gefüllten Zellen (4) an ihren Enden geschlossen sind.

3. Mehrwandige Hohlkammerplatte (1) nach irgendeinem der Ansprüche 1 oder 2, **dadurch gekennzeichnet, dass** sich die an der einen und/oder der anderen Seite der Reihe von mit Glasperlen (5) gefüllten Zellen (7, 71, 72, 73) befindliche(n) innere(n) Längswand bzw. Längswände (6, 61, 62) eine Dicke von mehr als 0,01 mm und vorzugsweise von mehr als 0,07 mm aufweist/aufweisen.

4. Mehrwandige Hohlkammerplatte (1) nach Anspruch 3, **dadurch gekennzeichnet, dass** die besagte(n) innere(n) Längswand bzw. Längswände (6, 61, 62) außerdem eine Dicke aufweist/aufweisen, die höchstens gleich der Dicke der äußeren Längswände (2, 21) ist.

5. Mehrwandige Hohlkammerplatte (1) nach Anspruch 3, **dadurch gekennzeichnet, dass** die besagte(n) innere(n) Längswand bzw. Längswände eine Dicke aufweist/aufweisen, die gleich derjenigen der äußeren Längswände (2, 21) ist.

6. Mehrwandige Hohlkammerplatte (1) nach irgendeinem der Ansprüche 1 bis 5, **dadurch gekennzeichnet, dass** zumindest die beiderseits der Reihe von mit Glasperlen gefüllten Zellen befindlichen Querwände eine Dicke von mehr als 0,01 mm und vorzugsweise von mehr als 0,2 mm aufweisen.

7. Mehrwandige Hohlkammerplatte (1) nach irgendeinem der Ansprüche 1 bis 6, **dadurch gekennzeichnet, dass** alle Querwände, welche die besagte Platte (1) umfasst, eine gleiche Dicke aufweisen, die größer als 0,01 mm und vorzugsweise größer als 0,2 mm ist.

8. Mehrwandige Hohlkammerplatte (1) nach einem der Ansprüche 6 oder 7, **dadurch gekennzeichnet, dass** die besagten Querwände eine Dicke aufweisen, die höchstens gleich der Dicke der äußeren Längswände (2, 21) ist.

9. Mehrwandige Hohlkammerplatte (1) nach einem der Ansprüche 6 oder 7, **dadurch gekennzeichnet, dass** die besagten Querwände eine Dicke aufweisen, die gleich derjenigen der äußeren Längswände (2, 21) ist.

10. Mehrwandige Hohlkammerplatte (1) nach einem der Ansprüche 1 bis 9, **dadurch gekennzeichnet, dass** die Glasperlen Vollperlen sind.

11. Mehrwandige Hohlkammerplatte (1) nach einem der Ansprüche 1 bis 9, **dadurch gekennzeichnet, dass** die Glasperlen Hohlperlen sind.

12. Öffnende oder nichtöffnende Vorrichtung zur Beleuchtung und/oder zur Lüftung und/oder zur Entrauchung des Daches eines Gebäudes, **dadurch gekennzeichnet, dass** sie mindestens eine mehrwandige Hohlkammerplatte (1) nach irgendeinem der Ansprüche 1 bis 11 umfasst.

13. Vorrichtung nach Anspruch 12, **dadurch gekennzeichnet, dass** alle Zellen einer Reihe von Zellen (7) der besagten Hohlkammerplatte (1) mit Glasperlen (5) gefüllt sind, wobei die besagte Reihe (7), deren Zellen gefüllt sind, sich unterhalb der Außenwand befindet, die mit dem Äußeren des Gebäudes in Berührung steht.

14. Verwendung von mindestens einer Hohlkammerplatte (1) nach irgendeinem der Ansprüche 1 bis 11 als Verkleidung oder Abdeckung für die Fassade eines Gebäudes.

15. Verwendung von mindestens einer Hohlkammerplatte (1) nach irgendeinem der Ansprüche 1 bis 11 als Trennwand zum Trennen von Räumen.

## Claims

1. Multi-wall alveolar plate (1) made of transparent or translucent material, including at least two substantially parallel longitudinal outer walls (2, 21) cross-braced by more than two transverse walls (3, 31, 32) delimiting a plurality of cells (4), wherein said plate (1) includes a number n of longitudinal inner walls (6, 61, 62) higher than one, each longitudinal inner wall (6, 61, 62) extending substantially parallel between the two longitudinal outer walls (2, 21), the plurality of longitudinal inner walls (6, 61, 62) defining a number of rows of cells (7, 71, 72, 73) higher than two and equal to n+1, each row of cells (7, 71, 72, 73) comprising at least two cells (4, 41), and wherein at least all the cells (4, 41) of the row of cells (7) located under one of the two outer walls (2, 21) are completely filled with glass particles (5), said particles being transparent or translucent glass beads having a particle size between 425 µm and 850 µm.

2. Multi-wall alveolar plate (1) according to claim 1, wherein the cells (4) filled with glass beads (5) are closed at their ends.

3. Multi-wall alveolar plate (1) according to any one of claims 1 or 2, wherein the longitudinal inner wall or walls (6, 61, 62) located on one side and/or the other side of the row of cells (7, 71, 72, 73) filled with glass beads (5), has/have a thickness of more than 0.01 mm and preferably of more than 0.07 mm.

4. Multi-wall alveolar plate (1) according to claim 3, wherein said longitudinal inner wall or walls (6, 61, 62) include(s) furthermore a thickness at most equal to the thickness of the longitudinal external walls (2, 21).

5. Multi-wall alveolar plate (1) according to claim 3, wherein said longitudinal inner wall or walls has/have a thickness equal to that of the longitudinal outer walls (2, 21).

6. Multi-wall alveolar plate (1) according to any one of claims 1 to 5, wherein at least the transverse walls located on either side of the row of cells filled with glass beads have a thickness of more than 0.01mm and preferably of more than 0.2mm.

7. Multi-wall alveolar plate (1) according to any one of claims 1 to 6, wherein all the transverse walls, which said plate (1) includes, have an identical thickness and of more than 0.01mm and preferably of more than 0.2mm.

8. Multi-wall alveolar plate (1) according to one of claims 6 or 7, wherein said transverse walls have a thickness at most equal to the thickness of the longitudinal outer walls (2, 21).

9. Multi-wall alveolar plate (1) according to one of claims 6 or 7, wherein said transverse walls have a thickness equal to that of the longitudinal outer walls (2, 21).

10. Multi-wall alveolar plate (1) according to one of claims 1 to 9, wherein the glass beads are solid beads.

11. Multi-wall alveolar plate (1) according to one of claims 1 to 9, wherein the glass beads are hollow beads.

12. Opening or non-opening device for illuminating and/or ventilating and/or smoke extraction from the roof of a building, wherein it includes at least one multi-wall alveolar plate (1) according to any one of claims 1 to 11.

13. Device according to claim 12, wherein all the cells of a row of cells (7) of said alveolar plate (1) are filled with glass beads (5), said row (7) the cells of which are filled being located under the outer wall, which is into contact with the outside of the building.

14. Use of at least one alveolar plate (1) according to any one of claims 1 to 11 as a coating or cover for the facade of a building.

15. Use of at least one alveolar plate (1) according to any one of claims 1 to 11 as a partition for separating rooms.
